# EUROPEAN PATENT SPECIFICATION

(11) **EP 2 505 451 B1**
(45) Date of publication and mention of the grant of the patent: **19.10.2016**
(21) Application number: 09851643.8
(22) Date of filing: 25.11.2009
(51) Int. Cl.: B61H 13/30, B60T 17/22, B60T 13/66

(54) **BRAKE CONTROLLER**
BREMSSTEUERUNG
RÉGULATEUR DE FREINAGE

(43) Date of publication of application: 03.10.2012
(73) Proprietor: Mitsubishi Electric Corporation, Tokyo 100-8310 (JP)
(72) Inventor: MATSUYAMA Etsuji, Tokyo 100-8310 (JP); ITANO Yasuharu, Tokyo 100-8310 (JP); YAMADA Hiroshi, Tokyo 100-8310 (JP)
(74) Representative: Sajda, Wolf E.
(86) International application number: PCT/JP2009/069874
(87) International publication number: WO 2011/064851

(56) References cited:
- JP-A- 10 044 964
- JP-A- 10 044 964
- JP-A- 2007 106 287
- JP-U- H 022 271
- US-A- 5 738 417

## Description

### Technical Field

The present invention relates to a brake controller for railcars.

### Background Art

Railcar brake systems employ brake controllers. The brake controller controls the pressure of compressed air supplied to the brake cylinder (brake cylinder pressure) applying a braking force on the axles. An example of the brake controller is disclosed in Patent Literature 1.

The brake controller disclosed in the Patent Literature 1 calculates a braking force and brake cylinder pressure (target values) necessary for its own car based on braking order information from the control platform and the pressure of air springs when the brake device serves in the regular braking. The brake controller controls the output pressure so as to meet the calculated target values.

On the other hand, when the brake device serves as the emergency braking, the brake controller utilizes a variable load valve to generate a brake cylinder pressure proportional to the variable load and supplies the generated pressure to the brake cylinder.

### Prior art Reference

### Patent Literature

Patent Literature 1: Unexamined Japanese Patent Application Publication JP-A-2007-106 287.

The brake controller of the above Patent Literature 1 comprises an emergency solenoid valve for operating the emergency brake, a switching solenoid valve for switching between the regular braking and emergency braking, and a booster solenoid valve for boosting the pressure output from the variable load valve. This configuration requires one solenoid valve for each function.

Therefore, many solenoid valves are used. Because of many solenoid valves, the device has a large exterior. Furthermore, there are many input and output ports for solenoid valves, which leads to many complex air passages; therefore, it is difficult to downsize the controller. Furthermore, a large number of parts contribute to a high failure rate. In addition, the booster solenoid valve cannot be utilized in the regular braking.

The present invention was made in view of the above circumstances and an exemplary object of the present invention is to provide a brake controller that is small and simple in configuration.

Another exemplary object of the present invention is to provide a brake controller properly utilizing a boost-switching solenoid valve both in the emergency braking and regular braking.

### Disclosure of Invention

The brake controller according to the present invention is a brake controller for railcars utilizing fluid pressure, comprising:
a variable load valve outputting a pressure corresponding to the load;
a boost-switching solenoid valve switching the pressure output from the variable load valve between a first pressure and a second pressure higher than the first pressure; and
a brake pressure supply part supplying a pressure to a brake cylinder using the pressure output from the variable load valve in each braking mode, regular and emergency, of the brake device.

The above brake controller utilizes the pressure output from the variable load valve to generate and supply a pressure to the brake cylinder both in regular braking and in emergency braking, respectively. Therefore, some solenoid valves such as emergency and switching solenoid valves are unnecessary. A smaller number of solenoid valves simplifies the configuration and requires fewer parts. Furthermore, one boost-switching solenoid valve can be utilized both in regular braking and in emergency braking.

### Brief Description of Drawings

- FIG. 1: is a diagram showing the configuration of the brake controller of Embodiment 1 of the present invention;
- FIG. 2: is a diagram showing the configuration of the brake control valve shown in FIG. 1;
- FIG. 3: is a diagram showing the configuration of the brake control unit shown in FIG. 1;
- FIG. 4 (a): is a chart showing change in the pressure in a brake cylinder and
- FIGs. 4 (b) and (c): are charts showing exemplary magnetization signals supplied to the brake control valve;
- FIGs. 5 (a) to (d): are graphical representation showing the relationship between the speed and variable load valve behavior;
- FIG. 6: is an illustration showing the relationship between the train carriage and axle and the brake controller;
- FIG. 7: is a diagram showing the configuration of the brake controller of Embodiment 2 of the present invention;
- FIG. 8: is a diagram showing the configuration of a modified embodiment of the brake controller shown in FIG. 7;
- FIG. 9: is a diagram showing the configuration of another brake controller; and
- FIG. 10: is a diagram showing the configuration of a hydraulic brake controller.

### Best Mode for Carrying Out the Invention

### Embodiment 1

A brake controller 11 according to Embodiment 1 of the present invention is a railcar braking device, controlling the flow of compressed air supplied to a brake cylinder provided on an axle.

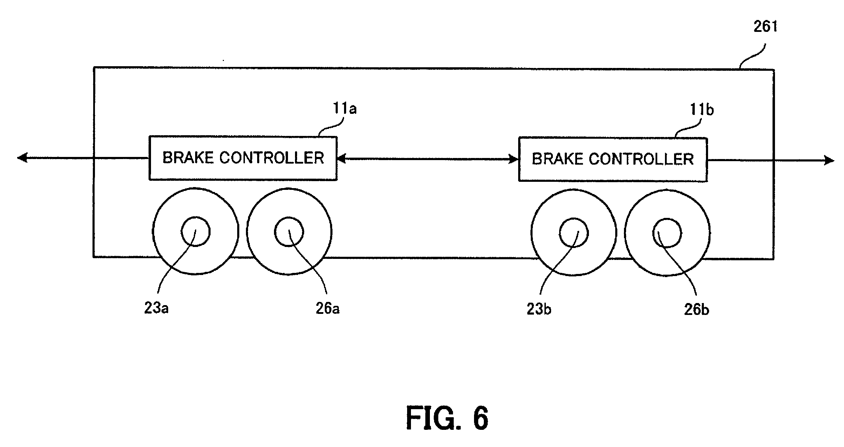

In this embodiment, it is assumed that, as shown in FIG. 6, two axles 23a and 26a and two axles 23b and 26b are provided in the front and in the back of a railcar carriage 261, respectively. Brake controllers 11a and 11b each control the flow of compressed air supplied to each of brake cylinders for braking on two corresponding axles 23a and 23a, or 23b and 26b.

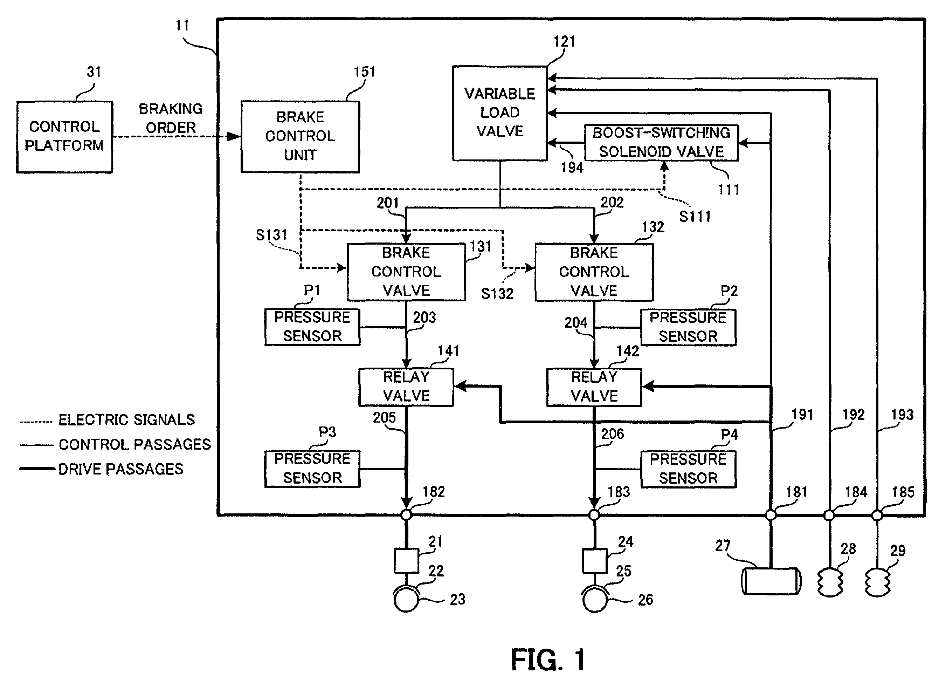

The brake controller 11 (11a and 11b) comprises, as shown in FIG. 1, an inlet port 181 from which compressed air from a compressed air tank 27 serving as a compressed air supply source enters, and supply ports 182 and 183 for supplying the compressed air to brake cylinders 21 and 24. The brake controller 11 further comprises variable load ports 184 and 185 from which compressed air serving as variable load signal pressures from air springs 28 and 29 supporting the carriage 261 enters.

The brake controller 11 further comprises a boost-switching solenoid valve 111, a variable load valve 121, two brake control valves 131 and 132 corresponding to the brake cylinders in number, and relay valves 141 and 142.

The boost-switching solenoid valve 111 comprises a solenoid valve and is connected to the inlet port 181 via a passage (air passage) 191 on the primary side and to the variable load valve 121 via a passage 194 on the secondary side. The boost-switching solenoid valve 111 closes the air passage in its demagnetized state and opens the air passage to let the air flow from the primary side to the secondary side in its magnetized state.

The variable load valve 121 is a mechanical valve and connected to the variable load ports 184 and 185 via variable load passages 192 and 193. The variable load valve 121 is further connected to the inlet port 181 via the passage 191 and to the secondary side of the boost-switching solenoid valve 111 via the passage 194.

When the boost-switching solenoid valve 111 is in a closed (demagnetized) state, the variable load valve 121 supplies a pressure proportional to the variable load signal pressure from the air springs 28 and 29 that indicates the pressure change according to the total weight of the carriage 261 including the weight of passengers to the secondary side.

On the other hand, when the boost-switching solenoid valve 111 is in an opened (magnetized) state, the variable load valve 121 supplies a pressure 1.2 times higher than when the boost-switching solenoid valve 111 is in the closed (demagnetized) state to the secondary side.

In other words, the variable load valve 121 switches the output pressure between a first pressure corresponding to the load on the carriage 261, and a second pressure corresponding to the load on the carriage 261 and higher than the first pressure in accordance with the switching of the boost-switching solenoid valve 111.

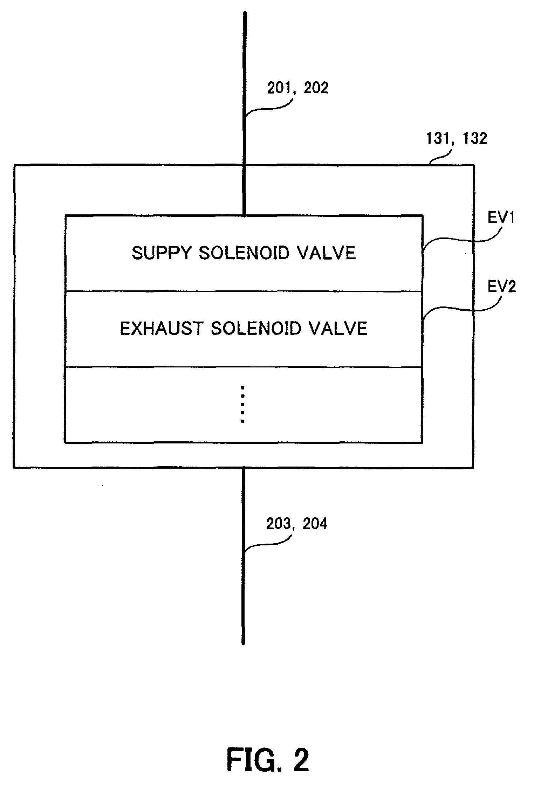

The brake control valve 131 comprises, as shown in FIG. 2, a supply solenoid valve EV1, an exhaust solenoid valve EV2, etc. As shown in FIG. 1, the brake control valve 131 is connected to the secondary side of the variable load valve 121 via a passage 201 on the primary side and to the primary side of the relay valve 141 via a passage 203 on the secondary side.

The brake control valve 131 supplies air to the brake cylinder 21 and discharges air from brake cylinder 21 depending on combinations of magnetization and demagnetization. Consequently, the pressure pressing a brake shoe 22 against the axle 23 is changed.

The brake control valve 132 comprises, as shown in FIG. 2, a supply solenoid valve EV1, an exhaust solenoid valve EV2, etc. As shown in FIG. 1, the brake control valve 132 is connected to the secondary side of the variable load valve 121 via a passage 202 on the primary side and to the primary side of the relay valve 142 via a passage 204 on the secondary side.

The brake control valve 132 supplies air to the brake cylinder 24 and discharges air from the brake cylinder 24 depending on combinations of magnetization and demagnetization. Consequently, the pressure pressing a brake shoe 25 against the axle 26 is changed.

The relay valve 141 is a mechanical valve amplifying the input pressure on the primary side and supplying the amplified pressure to the secondary side in order to improve the air control response. The primary side of the relay valve 141 is connected to the secondary side of the brake control valve 131 via the passage 203 to receive the pressure controlled by the brake control valve 131. Furthermore, the secondary side of the relay valve 141 is connected to the supply port 182 via a passage 205 to output the pressure-amplified air to the brake cylinder 21 via the supply port 182.

The relay valve 142 is also a mechanical valve amplifying the input pressure on the primary side and supplying the amplified pressure to the second side in order to improve the air control response. The primary side of the relay valve 142 is connected to the secondary side of the brake control valve 132 via the passage 204 to receive the pressure controlled by the brake control valve 132. Furthermore, the secondary side of the relay valve 142 is connected to the supply port 183 via a passage 206 to output the pressure-amplified air to the brake cylinder 24 via the supply port 183.

In this way, the brake control valves 131 and 132 and relay valves 141 and 142 serve, in cooperation with a brake control unit 151 described later, as a brake pressure supply part or supply means supplying a pressure to the brake cylinders 21 and 24 utilizing a pressure output from the variable load valve 121 in both of the regular braking and the emergency braking.

Pressure sensors P1 to P4 are connected to the passages 203 to 206. The pressure sensors P1 to P4 measure the air pressure in the passages to which they are connected and supply the measurements to the brake control unit 151.

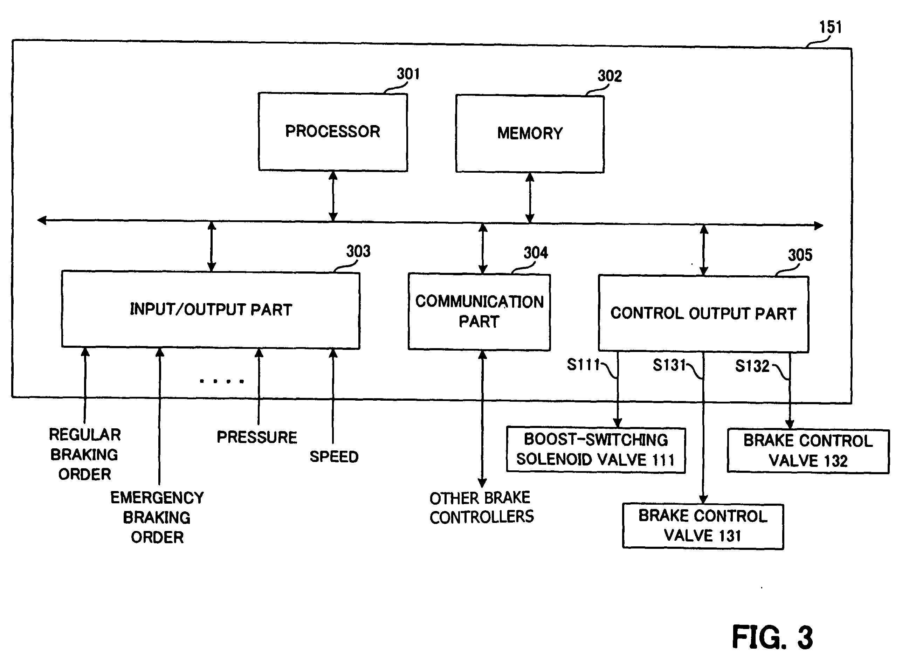

The brake control unit 151 is a unit magnetizing/demagnetizing the solenoid valves so that the brake controller 11 properly operates. The brake control unit 151 comprises, as shown in FIG. 3, a processor 301, a memory 302, an input/output part 303, a communication part 304, and a control output part 305.

The processor 301 executes operation programs stored in the memory 302 to control the operation of the brake controller 11. For example, in the regular braking procedure, the processor 301 obtains a target pressure value for the brake cylinders 21 and 24, controls demagnetization/magnetization of the boost-switching solenoid valve 111 using a control signal S111, controls demagnetization/magnetization of the brake control valve 131 using a control signal S131, and controls demagnetization/magnetization of the brake control valve 132 using a control signal S132.

The memory 302 stores operation programs to be executed by the processor 301 and fixed data and further serves as the work memory for the processor 301.

The input/output part 303 is used to receive regular and emergency braking orders, measurements of the pressure sensors P1 to P4, and the speed from speedometers, and supply them to the processor 301. Here, it is possible that the regular braking order is supplied, for example, from the control platform 31 and the emergency braking order is supplied from the conductor's compartment in addition to the control platform 31.

The communication part 304 conducts communication with other brake controllers.

The control output part 305 comprises a driver circuit outputting magnetization signals for controlling the solenoid valves and outputs a control signal S111 controlling demagnetization/magnetization of the boost-switching solenoid valve 111, a control signal S131 controlling demagnetization/ magnetization of multiple solenoid valves constituting the brake control valve 131, a control signal S132 controlling demagnetization/magnetization of multiple solenoid valves constituting the brake control valve 132, and the like.

Operation of the brake controller 11 having the above configuration will be described hereinafter.

### 1: Regular braking mode

When a regular braking order is issued from the control platform 31 to order the regular braking mode, the braking is performed by a combination of air braking and electric braking (regenerative breaking).

In such a case, the processor 301 magnetizes the boost-switching solenoid valve 111 via the control output part 305 using the control signal S111. Consequently, the boost-switching solenoid valve 111 opens and air enters the variable load valve 121. The air entering from the boost-switching solenoid valve 111 causes the variable load valve 121 to output a pressure 1.2 times higher than a pressure proportional to the pressure of the air springs 28 and 29. This high-pressure air is supplied to the primary side of the brake control valves 131 and 132.

The above is expressed by an equation: Pout = 1.2 · α · Pas
in which Pout is the output pressure, α is a proportionality coefficient, and Pas is the pressure of the air springs.

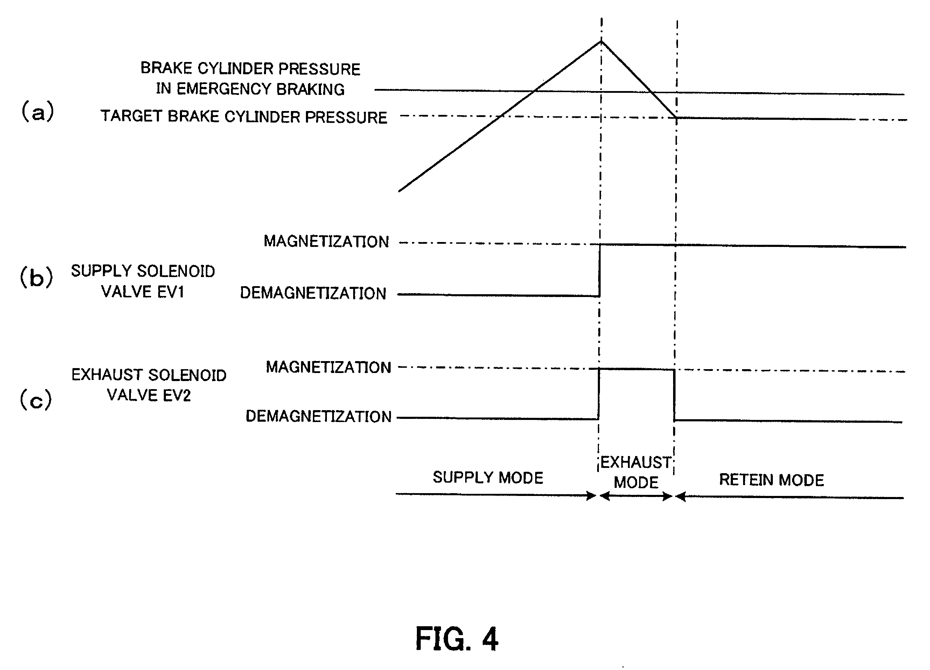

The processor 301 obtains a target pressure value for the brake cylinders 21 and 24 based on parameters such as the speed, load, brake condition, and pressure. The processor 301 sequentially outputs magnetization signals to magnetize/demagnetize the solenoid valves, for example, as shown in FIG. 4 (b) and FIG. 4 (c) so that the pressure of the brake cylinders 21 and 24 becomes equal to the obtained target value as shown in FIG. 4 (a).

The boost-switching solenoid valve 111 serves to supply a relatively higher input pressure to the brake control valves 131 and 132 (compared with when the boost-switching solenoid valve 111 is absent). Therefore, the pressure of the brake cylinders 21 and 24 can reach the target value via the relay valves 141 and 142 in a shorter time, improving the brake cylinder pressure response.

### 2: Emergence braking mode

When an emergency braking order is issued from the control platform 31 or conductor's compartment to order the emergency braking, the braking is performed by air braking.

In such a case, the processor 301 demagnetizes the boost-switching solenoid valve 111 via the control output part 305 using the control signal S111. Consequently, the boost-switching solenoid valve 111 closes and no air enters the variable load valve 121 from the boost-switching solenoid valve 111. Consequently, the variable load valve 121 outputs a pressure proportional to the pressure of the air springs and corresponding to the emergency braking.

The above is expressed by an equation: Pout = α · Pas
in which Pout is the output pressure, α is a proportionality coefficient, and Pas is the pressure of the air springs.

Furthermore, the processor 301 demagnetizes the brake control valves 131 and 132 via the control output part 305 using the control signals S131 and 132. In such a case, the brake control valves 131 and 132 supply the pressure of the variable load valve 121 to the relay valves 141 and 142 (the through mode).

Therefore, the pressure corresponding to the pressure of the air springs is supplied to the brake cylinders 21 and 24 via the brake control valves 131 and 132 and relay valves 141 and 142. Consequently, the emergency braking is configured without any special software procedure or any dedicated emergency brake valve or switch valve.

As described above, the function of the boost-switching solenoid valve 111 is basically disabled in the emergency braking mode. However, the processor 301 magnetizes the boost-switching solenoid valve 111 to boost the output pressure of the variable load valve 121 even in emergency braking under given conditions such as possible increase in the braking distance.

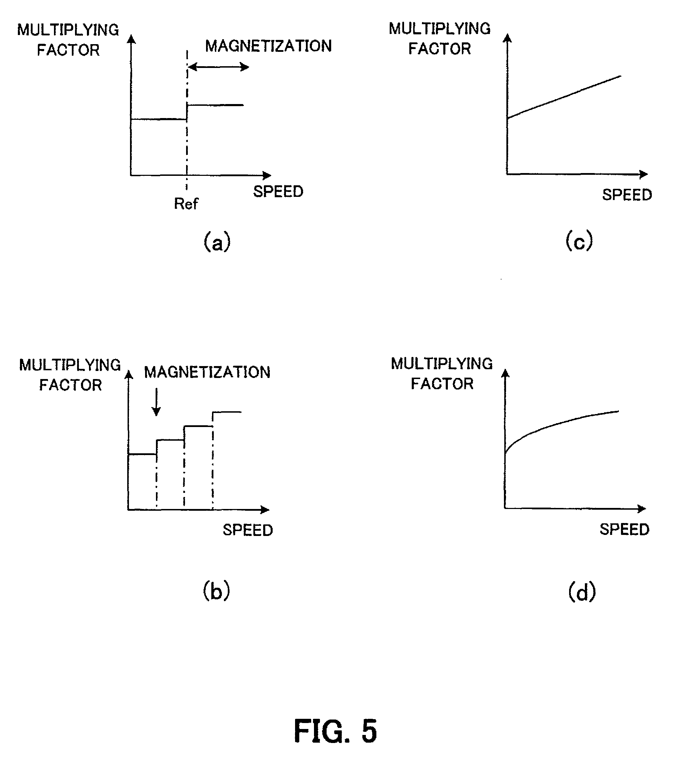

The boost-switching solenoid valve 111 can be magnetized under any conditions. For example, as shown in FIG. 5 (a), when the car speed exceeds a given reference value Ref, the boost-switching solenoid valve 111 is magnetized to boost the output pressure from the variable load valve 121.

Alternatively, the boost-switching solenoid valve 111 may be magnetized to boost the output pressure from the variable load valve 121 based on other parameters such as the car weight and passenger weight without being limited to the speed.

Furthermore, a combination of multiple parameters such as the speed plus load can be used as a condition. Furthermore, an order from the control platform 31 or conductor's compartment can be used as a given condition. Here, the boosting rate is not limited to 1.2 and any rate higher than 1 can be used.

Furthermore, the pressure-boosting rate (multiplier) may be changed based on any parameter. For example, the multiplying factor can be changed according to the car speed stepwise or continuously as shown in FIG. 5 (b) to FIG. 5 (d). Alternatively, the multiplying factor can depend on other parameters such as the car weight and passenger weight without being limited to the speed.

In such a case, a multiplying factor change profile is stored in the memory 302. The processor 301 magnetizes/demagnetizes the boost-switching solenoid valve 111 using the control signal S111 based on various parameters supplied from the speed sensors and the like and gives instruction on the multiplying factor to the variable load valve 121 as necessary. Furthermore, the multiplying factor can be set according to instruction from the control platform 31 or conductor's compartment.

As described above, the brake controller 11 according to this embodiment has a smaller number of solenoid valves and a simpler configuration compared with the prior art configuration. Therefore, the device can be reduced in size.

Furthermore, the boost-switching solenoid valve 111 is utilized both in the regular braking and in the emergency braking. Quick brake response is obtained in the regular braking and a large braking force is obtained in the emergency braking.

The present invention is not confined to the above embodiment and various modifications and applications are available.

For example, in the above embodiment, when the boost-switching solenoid valve 111 is magnetized, the variable load valve 121 outputs a pressure 1.2 times higher than the output pressure in the emergency braking. The multiplying factor is not limited to 1.2 and any multiplying factor higher than 1 can be used.

### Embodiment 2

The braking distance may be increased in emergency braking in the event that another braking controller has failed; for example, in the configuration of FIG. 6, a brake controller 11b has failed and a brake controller 11a controls all brakes on the carriage 261.

In the configuration of FIG. 6, for example, it is possible that the processors 301 of the brake controllers 11a and 11b communicate with each other and the processor 301 of the normal brake controller 11a magnetizes the boost-switching solenoid valve 111.

For example, if the processor 301 of the brake controller 11b does not respond to an inquiry from the processor 301 of the brake controller 11a, or the processor 301 of the brake controller 11b detects a failure or abnormal event and informs the processor 301 of the brake controller 11a accordingly, the processor 301 of the brake controller 11a magnetizes the boost-switching solenoid valve 111 of its own device.

However, in this way, it takes time before the boost-switching solenoid valve 111 is magnetized.

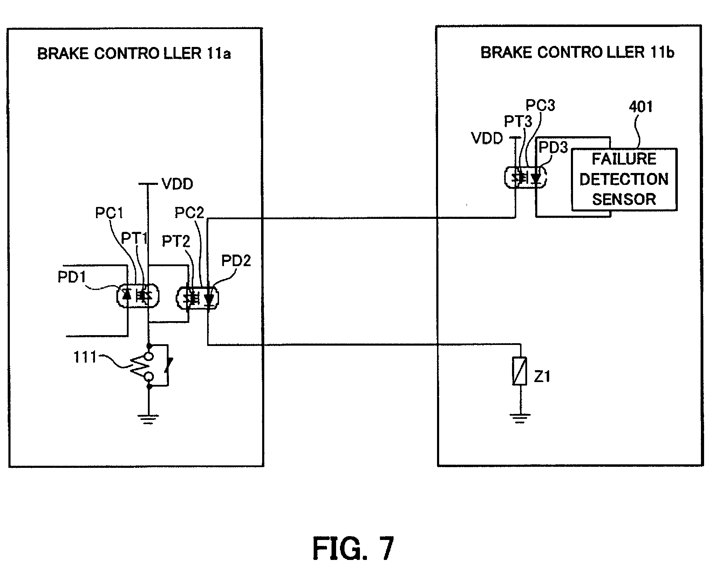

Then, a configuration to quickly magnetize the boost-switching solenoid valve 111 of one brake controller 11a when the other brake controller 11b detects an abnormal event in itself will be described hereafter with reference to FIG. 7.

In FIG. 7, the boost-switching solenoid valve 111 of the brake controller 11 a opens/closes as a boost-switching solenoid valve control relay PC1 opens/closes. The boost-switching solenoid valve control relay PC1 is a type of photocoupler. As a light emitting diode PD1 is energized by the control output part 305 of the brake controller 11a and emits light, a phototransistor PT1 connected to the boost-switching solenoid valve 111 is turned on and the boost-switching solenoid valve 111 is powered and magnetized.

On the other hand, a phototransistor PT2 of a photocoupler PC2 is connected in parallel to the boost-switching solenoid valve control relay PC 1. A light emitting diode PD2 of the photocoupler PC2 is connected to the brake controller 11b, being grounded via a current-limiting impedance Z1 and connected to a power source via a phototransistor PT3 of a photocoupler PC3. A failure detection sensor 401 of the brake controller 11b is connected to a light emitting diode PD3 of the photocoupler PC 3.

In the above configuration, when the brake controller 11b is normal, the failure detection sensor 401 sends no electric current to the light emitting diode PD3. Therefore, the light emitting diode PD3 does not emit light, the phototransistor PT3 is off, no current flows through the light emitting diode PD2, and the phototransistor PT2 remains off. Then, the boost-switching control valve 111 of the brake controller 11a operates in accordance with opening/closing of the boost-switching solenoid valve control relay PC 1.

On the other hand, when the brake controller 11b has failed, the failure detection sensor 401 sends an electric current to the light emitting diode PD3 so that the light emitting diode PD3 emits light. Then, the phototransistor PT3 is turned on and an electric current flows as follows: the power source VDD → phototransistor PT3 → light emitting diode PD2 → impedance Z1 → ground.

In other words, the phototransistor PT3 serves as a transmitter and transmits a failure-informing signal to the normal brake controller 11a. Then, the light emitting diode PD2 emits light and the phototransistor PT2 is turned on.

As the phototransistor PT2 is turned on, the boost-switching solenoid valve 111 is powered via the turned-on phototransistor PT2 regardless of whether the boost-switching solenoid valve control relay PC1 is opened/closed. Then, the boost-switching control valve 111 of the brake controller 11a is magnetized.

With the above configuration, the boost-switching control valve 111 of the brake controller 11a can be magnetized nearly in sync with detection of failure of the braking controller 11b, allowing for quick response.

In other words, in sync with failure detection of the failure detection sensor 401, the photocoupler PC3 transmits a signal for controlling the boost-switching solenoid valve of the normal brake controller 11a. In response to the transmitted signal, the boost-switching solenoid valve control relay (photocoupler) PC1 controls (turns on) the boost-switching solenoid valve 111 of its own device.

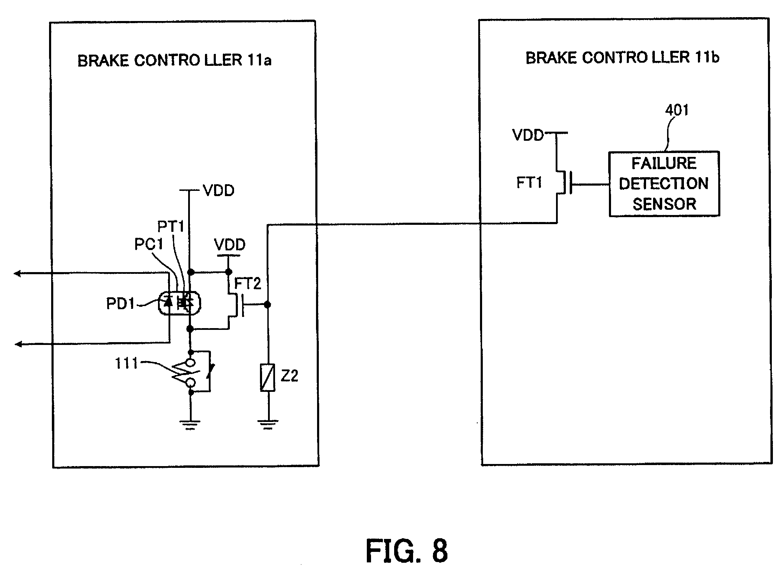

The configuration shown in FIG. 7 is not restrictive and proper modifications can be made. In other words, any other configuration can be employed as long as the boost-switching control valve 111 of one brake controller can directly be magnetized when a failure or abnormal event is detected in the other brake controller. For example, the configuration shown in FIG. 8 can be employed.

In FIG. 8, output of the failure detection sensor 401 of the brake controller 11b causes a transistor (FET) FT1 to turn on and an electric current flows through a current-limiting impedance Z2 via the turned-on transistor FT1. The voltage generated in the impedance Z2 turns on a second transistor FT2 connected in parallel to the boost-switching solenoid valve control relay PC1 and magnetizes the boost-switching solenoid valve 111.

Here, the transistors are not limited to field effect transistors and can be bipolar transistors or even relays. In addition, proper modifications in configuration can be made.

It is also natural in the configuration of FIG. 7 or FIG. 8 to provide the failure detection sensor to the brake controller 11a and the boost-switching solenoid valve 111 and a structure for magnetizing it to the brake controller 11b.

The configuration to magnetize the boost-switching solenoid valve of a normal brake controller when another brake controller has failed is extensively applicable not only to the brake controller 11 having the configuration shown in FIG. 1 but also to brake control with multiple brake controllers.

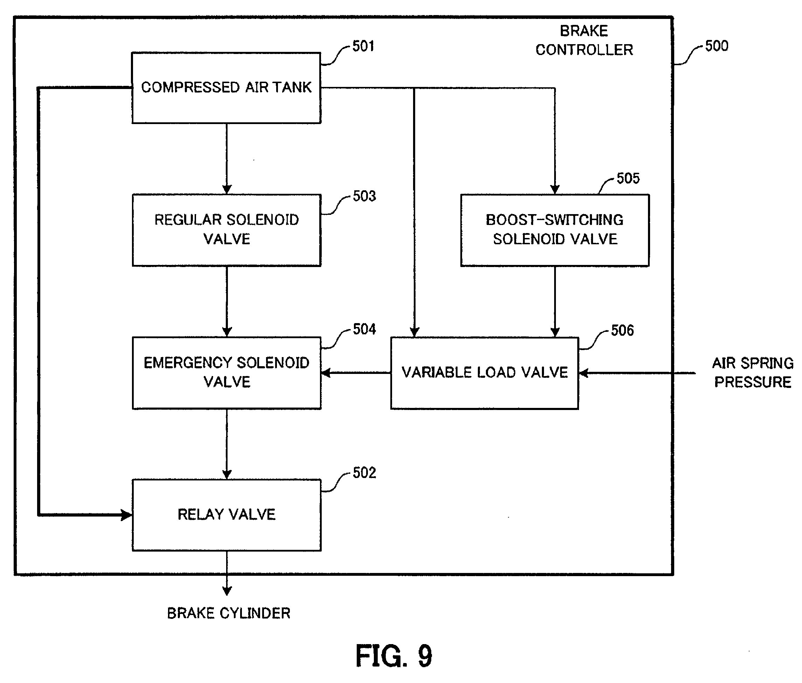

For example, it is applicable to a brake controller 500 having the configuration shown in FIG. 9. In FIG. 9, the compressed air in a compressed air tank 501 is supplied to regular solenoid valves 503, relay valves 502, boost-switching solenoid valves 505, and variable load valves 506, which are provided as many as the axles to be braked.

The output pressure of the regular solenoid valve 503 is supplied to an emergency solenoid valve 504. The output of the boost-switching solenoid valve 505 is supplied to the variable load valve 506. The pressure of an air spring is also supplied to the variable load valve 506.

The output of the variable load valve 506 is supplied to the emergency solenoid valve 504. The output of the emergency solenoid valve 504 is supplied to the relay valve 502. The output of the relay valve 502 is supplied to a brake cylinder.

In the above configuration, the emergency solenoid valve 504 selects the output pressure of the regular solenoid valve 503 in the regular braking and selects the output pressure of the variable load valve 506 in the emergency braking. In other words, the emergency solenoid valve 504 serves as a regular/ emergency-switching solenoid valve for switching between the regular braking and emergency braking.

In regular braking, the regular solenoid valve 503 is magnetized/ demagnetized under the control of the brake control unit 151 to output a pressure corresponding to a target brake cylinder pressure. The emergency solenoid valve 504 transmits the output pressure of the regular solenoid valve 503 to the relay valve 502. The relay valve 502 supplies a pressure corresponding to the supplied pressure to the brake cylinder.

On the other hand, in emergency braking, the variable load valve 506 outputs a pressure corresponding to the pressure of an air spring. However, if the boost-switching solenoid valve 505 is magnetized, the variable load valve 506 outputs a pressure higher (for example, 1.2 times higher) than when the boost-switching solenoid valve 505 is demagnetized.

The emergency solenoid valve 504 transmits the output pressure of the variable load valve 506 to the relay valve 502. The relay valve 502 supplies a pressure corresponding to the supplied pressure to the brake cylinder.

The brake controller 500 has a more complex configuration and more parts compared with the brake controller 11 of Embodiment 1. Furthermore, the brake controller 500 does not have capability of quicker pressure response in the regular braking by magnetizing the boost-switching solenoid valve 505.

However, with the configurations of FIGS. 7 and 8, in the event that one of multiple brake controllers 500 has failed, the braking pressure of another brake controller 500 can quickly and automatically be boosted in the emergency braking.

The present invention is not confined to the above embodiments and various modifications and applications are available. For example, in the above embodiments, compressed air is employed as the pressure transmittance medium. Any other gas can be employed. Furthermore, the pressure transmittance medium is not restricted to a gas and can be a liquid such as oil.

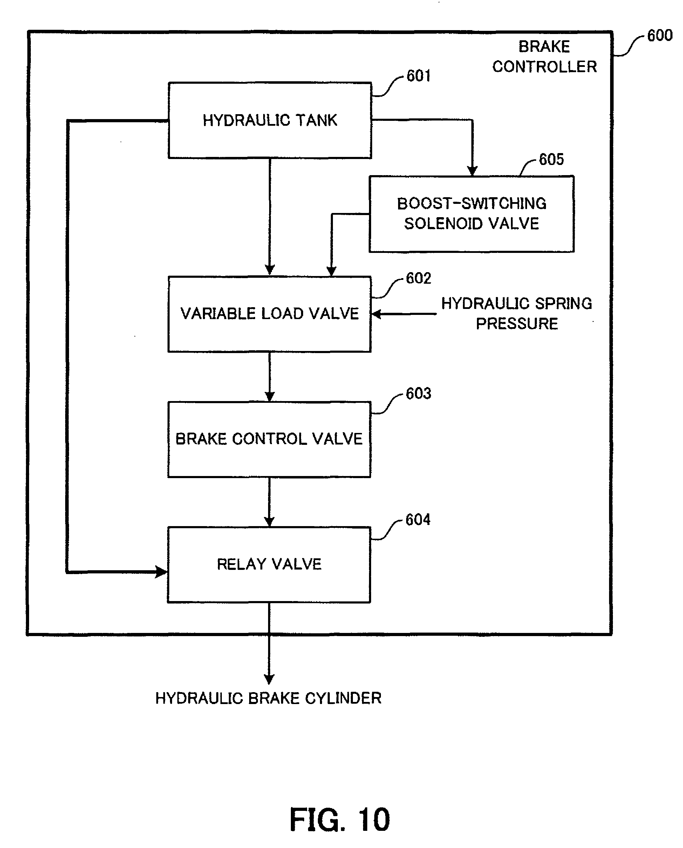

For example, it is possible that, as shown in FIG. 10, a hydraulic tank 601 is filled with high-pressure oil, the oil is supplied to a boost-switching solenoid valve 605, variable load valve 602, and relay valve 604, and the pressure of an oil spring is supplied to a brake control valve 603.

In the above explanation, one brake controller controls two axles. The present invention is not confined thereto. One brake controller can control a single axle or three or more axles. In such a case, the brake control valve and relay valve are provided in accordance with the number of axles to be braked.

In the above embodiments, the variable load valve outputs on the secondary side a pressure proportional to the pressure on the primary side. The present invention is not confined thereto. The variable load valve can output a pressure having a linear relation or any other relation to the pressure on the primary side.

In the above embodiments, the variable load valve 121 boosts the pressure when the boost-switching solenoid valve 111 is magnetized. It is possible that the variable load valve 121 boosts the pressure when the boost-switching solenoid valve 111 is demagnetized. In other words, the variable load valve 121 boosts the pressure when the boost-switching solenoid valve 111 is in one of the two states and does not boost the pressure when the boost-switching solenoid valve 111 is in the other state.

The above-described circuit structures and operations are given by way of example and the present invention is not confined thereto.

### List of Reference Signs

- 11, 11a, 11b, 500, 600: brake controller
- 21, 24: brake cylinder
- 22, 25: brake shoe
- 23,26: axle
- 27: compressed air tank
- 28, 29: air spring
- 31: control platform
- 111: boost-switching solenoid valve
- 121: variable load valve
- 131, 132: brake control valve
- 141, 142: relay valve
- 151: brake control unit
- 261: carriage

## Claims

1. A brake controller for railcars utilizing fluid pressure, comprising:
- a variable load valve (121) outputting a pressure corresponding to a load on a carriage;
- a boost-switching solenoid valve (111) switching the pressure output from the variable load valve (121) between a first pressure and a second pressure higher than the first pressure; and
- a brake pressure supply part (131, 132; 141, 142) supplying a pressure to a brake cylinder (21, 24) using the pressure output from the variable load valve (121) in each of regular braking and emergency braking of the brake, **characterized by**
the boost-switching solenoid valve (111)
causing the variable load valve (121) to output the second pressure in the regular braking of the brake; and
causing the variable load valve (121) to output the second pressure when a given condition is fulfilled and output the first pressure when the given condition is not fulfilled in the emergency braking of the brake.

2. The brake controller according to claim 1,
**characterized in that** the given condition is a condition indicating that the braking force in emergency braking is insufficient.

3. The brake controller according to claim 1 or 2,
**characterized in that** the given condition is a condition including the car speed.

4. The brake controller according to claim 1, 2 or 3,
**characterized in that** the given condition includes a condition that any other brake controller fails.

5. The brake controller according to one of claims 1 to 4,
**characterized by** further comprising:
- a failure detection sensor (401) detecting a failure in its own brake controller;
- a transmitter (FT1, FT2) transmitting a signal for controlling the boost-switching solenoid valve (111) of another brake controller in response to failure detection by the failure detection sensor (401); and
- a control part controlling the boost-switching solenoid valve (121) of its own brake controller in response to the signal transmitted from the transmitter of another brake device.

6. The brake controller according to any one of claims 1 to 5,
**characterized in that** the brake pressure supply part (131, 132; 141, 142) comprises:
- a brake control valve (131, 132) outputting a brake control pressure using the output pressure from the variable load valve (121); and
- a relay valve (141, 142) supplying a pressure obtained by amplifying the brake control pressure output from the brake control valve (131, 132) to a brake cylinder (21, 24).

7. The brake controller according to claim 6,
**characterized in that** the brake control valve (131, 132) controls and outputs the pressure output from the variable load valve (121) and outputs a controlled pressure to the relay valve (141, 142) in the regular braking of the brake; and
outputs the pressure output from the variable load valve (121) as it is to the relay valve (141, 142) in the emergency braking of the brake.

8. The brake controller according to any one of claims 1 to 7,
**characterized in that**
the variable load valve (121) receives a pressure signal indicating the load on a carriage, and
outputs a first pressure corresponding to the load when the boost-switching solenoid valve (111) is in a first state, and output a second pressure corresponding to the load and higher than the first pressure when the boost-switching solenoid valve (111) is in a second state.

9. The brake controller according to any one of claims 1 to 8,
**characterized in that**
the fluid is air or oil; and
the pressure is air pressure or oil pressure.

## Patentansprüche

1. Bremssteuerung für Schienenfahrzeuge, bei der ein Fluiddruck verwendet wird, wobei die Bremssteuerung Folgendes aufweist:
- ein variables Lastventil (121), das einen Druck entsprechend einer Last auf einem Wagen abgibt;
- ein Verstärkungs-Schaltmagnetventil (111), das den von dem variablen Lastventil (121) abgegebenen Druck zwischen einem ersten Druck und einem zweiten Druck umschaltet, der höher ist als der erste Druck; und
- ein Bremsdruckversorgungsteil (131, 132; 141, 142), das unter Verwendung des Drucks, der von dem variablen Lastventil (121) jeweils bei einem regulären Bremsvorgang und einem Notbremsvorgang der Bremse abgegeben wird, einem Bremszylinder (21, 24) einen Druck zuführt,
**dadurch gekennzeichnet,**
**dass** das Verstärkungs-Schaltmagnetventil (111) das variable Lastventil (121) dazu veranlasst, bei dem regulären Bremsvorgang der Bremse den zweiten Druck abzugeben; sowie das variable Lastventil (121) dazu veranlasst, bei dem Notbremsvorgang der Bremse den zweiten Druck abzugeben, wenn eine bestimmte Bedingung erfüllt ist, und den ersten Druck abzugeben, wenn die bestimmte Bedingung nicht erfüllt ist.

2. Bremssteuerung nach Anspruch 1,
**dadurch gekennzeichnet,**
**dass** es sich bei der bestimmten Bedingung um eine Bedingung handelt, die anzeigt, dass die Bremskraft bei einem Notbremsvorgang nicht ausreichend ist.

3. Bremssteuerung nach Anspruch 1 oder 2,
**dadurch gekennzeichnet,**
**dass** es sich bei der bestimmten Bedingung um eine Bedingung handelt, die die Fahrzeuggeschwindigkeit beinhaltet.

4. Bremssteuerung nach Anspruch 1, 2 oder 3,
**dadurch gekennzeichnet,**
**dass** die bestimmte Bedingung eine Bedingung beinhaltet, bei der eine beliebige andere Bremssteuerung ausfällt.

5. Bremssteuerung nach einem der Ansprüche 1 bis 4,
**dadurch gekennzeichnet,**
**dass** sie ferner Folgendes aufweist:
- einen Fehlererkennungssensor (401), der einen Fehler in seiner eigenen Bremssteuerung detektiert;
- einen Sender (FT1, FT2), der ein Signal zur Steuerung des Verstärkungs-Schaltmagnetventils (111) einer weiteren Bremssteuerung in Reaktion auf die Fehlererkennung durch den Fehlererkennungssensor (401) sendet; und
- ein Steuerorgan, das das Verstärkungs-Schaltmagnetventil (121) seiner eigenen Bremssteuerung in Reaktion auf das von dem Sender einer weiteren Bremsvorrichtung gesendete Signal steuert.

6. Bremssteuerung nach einem der Ansprüche 1 bis 5,
**dadurch gekennzeichnet,**
**dass** das Bremsdruckversorgungsteil (131, 132; 141, 142) Folgendes aufweist:
- ein Bremssteuerventil (131, 132), das einen Bremssteuerdruck unter Verwendung des Ausgangsdrucks von dem variablen Lastventil (121) abgibt; und
- ein Relaisventil (141, 142), das einen durch Verstärken des von dem Bremssteuerventil (131, 132) abgegebenen Bremssteuerdrucks erzielten Druck an einen Bremszylinder (21, 24) abgibt.

7. Bremssteuerung nach Anspruch 6,
**dadurch gekennzeichnet,**
**dass** das Bremssteuerventil (131, 132) den von dem variablen Lastventil (121) abgegebenen Druck steuert und abgibt sowie
bei dem regulären Bremsvorgang der Bremse einen gesteuerten Druck an das Relaisventil (141, 142) abgibt; und
bei dem Notbremsvorgang der Bremse den von dem variablen Lastventil (121) abgegebenen Druck, so wie er ist, an das Relaisventil (141, 142) abgibt.

8. Bremssteuerung nach einem der Ansprüche 1 bis 7,
**dadurch gekennzeichnet,**
**dass** das variable Lastventil (121) ein Drucksignal empfängt, das die Last auf einem Wagen anzeigt, sowie einen der Last entsprechenden ersten Druck abgibt, wenn sich das Verstärkungs-Schaltmagnetventil (111) in einem ersten Zustand befindet, und einen der Last entsprechenden zweiten Druck, der höher ist als der erste Druck, abgibt, wenn sich das Verstärkungs-Schaltmagnetventil (111) in einem zweiten Zustand befindet.

9. Bremssteuerung nach einem der Ansprüche 1 bis 8,
**dadurch gekennzeichnet,**
**dass** es sich bei dem Fluid um Luft oder Öl handelt; und
**dass** der Druck ein Luftdruck oder ein Öldruck ist.

## Revendications

1. Dispositif de commande de frein pour véhicule ferroviaire utilisant la pression d'un fluide, comprenant :
- une valve à charge variable (121) qui délivre une pression correspondant à une charge sur un chariot ;
- une valve solénoïde de commutation d'amplification (111) qui commute la pression à la sortie de la valve à charge variable (121) entre une première pression et une seconde pression plus forte que la première pression ; et
- une partie d'alimentation de pression de freinage (131, 132 ; 141, 142) qui fournit une pression à un cylindre de frein (21, 24) en utilisant la pression délivrée par la valve à charge variable (121) dans chacun d'un freinage régulier et d'un freinage d'urgence du frein,
**caractérisé en ce que**
la valve solénoïde de commutation d'amplification (111) amène la valve à charge variable (121) à délivrer la seconde pression dans le freinage régulier du frein ; et
amène la valve à charge variable (121) à délivrer la seconde pression quand une condition donnée est satisfaite, et à délivrer la première pression quand la condition donnée n'est pas satisfaite dans le freinage d'urgence du frein.

2. Dispositif de commande de frein selon la revendication 1, **caractérisé en ce que** la condition donnée est une condition indiquant que la force de freinage dans un freinage d'urgence est insuffisante.

3. Dispositif de commande de frein selon la revendication 1 ou 2, **caractérisé en ce que** la condition donnée est une condition incluant la vitesse du véhicule.

4. Dispositif de commande de frein selon la revendication 1, 2 ou 3, **caractérisé en ce que** la condition donnée inclut une condition selon laquelle un quelconque autre dispositif de commande de frein est défaillant.

5. Dispositif de commande de frein selon l'une quelconque des revendications 1 à 4,
**caractérisé en ce qu'**il comprend en outre :
- un capteur de détection de défaillance (401) qui détecte une défaillance dans son propre dispositif de commande de frein ;
- un émetteur (FT1, FT2) qui émet un signal pour commander la valve solénoïde de commutation d'amplification (111) d'un autre dispositif de commande de frein en réponse à une détection de défaillance par le capteur de détection de défaillance (401) ; et
- une partie de commande qui commande la valve solénoïde de commutation d'amplification (121) de son propre dispositif de commande de frein en réponse au signal émis depuis l'émetteur d'un autre dispositif de frein.

6. Dispositif de commande de frein selon l'une quelconque des revendications 1 à 5,
**caractérisé en ce que** la partie d'alimentation de pression de freinage (131, 132 ; 141, 142) comprend :
- une valve de commande de frein (131, 132) qui délivre une pression de commande de frein en utilisant la pression de sortie de la valve à charge variable (121) ; et
- une valve relais (141, 142) qui alimente une pression obtenue par amplification de la pression de commande de frein délivrée depuis la valve de commande de frein (131, 132) vers un cylindre de frein (21, 24).

7. Dispositif de commande de frein selon la revendication 6, **caractérisé en ce que** la valve de commande de frein (131, 132) commande et délivre la pression délivrée depuis la valve à charge variable (121) et délivre une pression commandée à la valve relais (141, 142) dans le freinage régulier du frein ; et
délivre la pression délivrée depuis la valve à charge variable (121) telle qu'elle à la valve relais (141, 142) dans le freinage d'urgence du frein.

8. Dispositif de commande de frein selon l'une quelconque des revendications 1 à 7,
**caractérisé en ce que**
la valve à charge variable (121) reçoit un signal de pression indiquant la charge sur un chariot, et
délivre une première pression correspondant à la charge quand la valve solénoïde de commutation d'amplification (111) est dans un premier état, et délivre une seconde pression correspondant à la charge et plus élevée que la première pression quand la valve solénoïde de commutation d'amplification (111) est dans un second état.

9. Dispositif de commande de frein selon l'une quelconque des revendications 1 à 8,
**caractérisé en ce que**
le fluide est de l'air ou de l'huile ; et
la pression est une pression d'air ou une pression d'huile.
